# EUROPEAN PATENT SPECIFICATION

(11) **EP 3 300 042 B1**
(45) Date of publication and mention of the grant of the patent: **17.08.2022**
(21) Application number: 16817220.3
(22) Date of filing: 27.06.2016
(51) Int. Cl.: G07F 7/08, G06Q 20/32, G06Q 20/34, G06K 19/07

(54) **A MOBILE TERMINAL**
MOBILES ENDGERÄT
TERMINAL MOBILE

(30) Priority: 30.06.2015 CN 201510377689
(43) Date of publication of application: 28.03.2018
(73) Proprietor: Honor Device Co., Ltd., Shenzhen, Guangdong 518040 (CN)
(72) Inventor: SHU, Wenxian, Shenzhen Guangdong 518129 (CN); LI, Ruiliang, Shenzhen Guangdong 518129 (CN); YU, Yao, Shenzhen Guangdong 518129 (CN)
(74) Representative: Roth, Sebastian
(86) International application number: PCT/CN2016/087285
(87) International publication number: WO 2017/000856

(56) References cited:
- WO-A1-2014/085862
- CN-A- 102 209 129
- CN-A- 102 768 790
- CN-U- 204 178 433
- US-A1- 2005 061 874
- US-A1- 2011 018 640
- US-A1- 2011 022 755
- US-A1- 2014 173 690
- Ann Cavoukian ET AL: "Mobile Near Field Communications (NFC) - "Tap 'n Go": Keep it Secure and Private", , 1 November 2011 (2011-11-01), XP055471437, Retrieved from the Internet: URL:http://www.ontla.on.ca/library/reposit ory/mon/25011/314183.pdf

## Description

### TECHNICAL FIELD

The present invention relates to the communications field, and in particular, to a mobile phone.

### BACKGROUND

A Near Field Communication (NFC, Near Field Communication) technology evolves out of combination of a non-contact radio frequency identification (RFID, Radio Frequency Identification) technology and an interworking technology, and integrates functions of an induction card reader and an induction card, and a point-to-point function into a single chip, so as to implement identification and data exchange with a compatible device within a short distance.

To facilitate shopping and consumption in daily life, an increasing quantity of terminal products now have integrated an NFC function. Operators China Mobile and China Unicom have released corresponding NFC-enabled mobile phones, and China Telecom will also launch mobile phone terminals with an NFC function.

An NFC-enabled mobile phone is a mobile phone with an NFC module. Many corresponding applications may be developed for the mobile phone with the NFC module. A card mode is an application mode of the NFC-enabled mobile phone. In the card mode, a device with an NFC function is simulated as a non-contact card, such as an entrance guard card, a bus pass, or a bank card. The card emulation mode is mainly used for non-contact mobile payment in malls, transportation, and the like. During shopping and consumption, people can conveniently and efficiently make a payment by using an NFC module of a mobile phone. A user simply brings a mobile phone near a point of sale (POS, point of sale) machine, and enters a password to confirm a transaction or directly accept a transaction. In this manner, power is supplied to the card by a non-contact card reader, and the card can still work even if the NFC-enabled mobile phone is out of power.

However, when a mobile phone is powered off, if a thief brings a portable POS machine near the mobile phone, an NFC function of the mobile phone can still be enabled for swiping to obtain an account balance, consequently causing a loss to a user.

Document US 20140173690 A1 discloses a method by analyzing the signal from NFC communication to determine if the NFC communication is authentic among NFC-enabled devices.

Document WO 2014085862 A1 discloses a jamming device to protect RFID enabled objects from fraudulent reading by emitting jamming signals.

### SUMMARY

Embodiments of the present invention provide a mobile phone, so as to improve security of an NFC module when the mobile phone is in a power-off state. The embodiments of the present invention are defined by the appended claims.

It can be learned from the foregoing technical solution that the embodiments of the present invention have the following advantages:

The mobile phone in the embodiments of the present invention includes the NFC module, the alarm, the control circuit, and the battery. The NFC module may perform the card swiping operation, and generate the interrupt signal. The control circuit starts the alarm according to the interrupt signal, and the alarm sends the alarm signal. When the mobile phone is powered off, the battery still outputs a voltage, and the output voltage can support normal running of the NFC module, the control circuit, and the alarm. Therefore, even if the mobile phone is in the power-off state, the alarm can still be triggered by the control circuit and send an alarm. That is, in this solution, even if the mobile phone is in the power-off state, the mobile phone still sends an alarm upon NFC-enabled card swiping. In this case, a user can know in time about mistaken NFC-enabled card swiping, thereby preventing a greater loss.

### BRIEF DESCRIPTION OF DRAWINGS

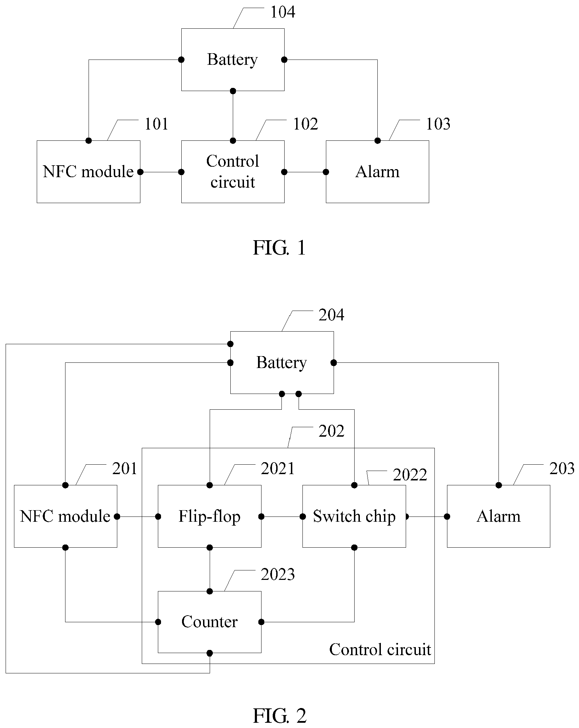

It is noted that the embodiment of FIG. 1 is not part of the invention but is an illustrative example helpful for understanding the invention.
FIG. 1 is a schematic diagram of an embodiment of a mobile phone according to the embodiments of the present invention;
FIG. 2 is a schematic diagram of another embodiment of a mobile phone according to the embodiments of the present invention;
FIG. 3 is a schematic diagram of another embodiment of a mobile phone according to the embodiments of the present invention;
FIG. 4 is a schematic diagram of another embodiment of a mobile phone according to the embodiments of the present invention;
FIG. 5 is a schematic diagram of an embodiment of a card swiping alerting method according to the embodiments of the present invention;
FIG. 6 is a schematic diagram of another embodiment of a card swiping alerting method according to the embodiments of the present invention; and
FIG. 7 is a schematic diagram of another embodiment of a card swiping alerting method according to the embodiments of the present invention.

### DESCRIPTION OF EMBODIMENTS

The following clearly and completely describes the technical solutions in the embodiments of the present invention with reference to the accompanying drawings in the embodiments of the present invention.

The embodiments of the present invention provide a mobile terminal which refers to a mobile phone in particular in the following description so as to send an alarm upon an NFC-enabled card swiping operation when the mobile terminal is in a power-off state, alert a user in time, and prevent a greater loss.

Referring to FIG. 1, an embodiment of a mobile terminal in the embodiments of the present invention includes an NFC module 101, a control circuit 102, an alarm 103, and a battery 104. The control circuit 102 is connected to the NFC module 101 and the alarm 103, and the mobile terminal is in a power-off state.

The battery 104 is configured to supply power to the NFC module 101, the control circuit 102, and the alarm 103.

The NFC module 101 is configured to perform a card swiping operation according to a received card swiping request, and generate an interrupt signal.

The control circuit 102 is configured to start the alarm 103 according to the interrupt signal generated by the NFC module 101.

The alarm 103 is configured to send an alarm signal.

It should be noted that the card swiping operation herein is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

The mobile terminal in this embodiment of the present invention includes the NFC module 101, the alarm 103, the control circuit 102, and the battery 104. The NFC module 101 may perform the card swiping operation, and generate the interrupt signal. The control circuit 102 starts the alarm 103 according to the interrupt signal, and the alarm 103 sends the alarm signal. When the mobile terminal is powered off, the battery 104 still outputs a voltage, and the output voltage can support normal running of the NFC module 101, the control circuit 102, and the alarm 103. Therefore, even if the mobile terminal is in the
power-off state, the alarm 103 can still be triggered by the control circuit 102 and send an alarm. That is, in this solution, even if the mobile terminal is in the power-off state, the mobile terminal still sends an alarm upon NFC-enabled card swiping. In this case, a user can know in time about mistaken NFC-enabled card swiping, thereby preventing a greater loss.

For ease of understanding, the following describes in detail the mobile terminal in the embodiments of the present invention. Referring to FIG. 2, another embodiment of a mobile terminal in the embodiments of the present invention includes:
an NFC module 201, a control circuit 202, an alarm 203, and a battery 204, where the control circuit 202 is connected to the NFC module 201 and the alarm 203, and the mobile terminal is in a power-off state.

The battery 204 is configured to supply power to the NFC module 201, the control circuit 202, and the alarm 203.

The NFC module 201 is configured to perform a card swiping operation according to a received card swiping request, and generate an interrupt signal.

The control circuit 202 is configured to start the alarm 203 according to the interrupt signal generated by the NFC module 201.

The alarm 203 is configured to send an alarm signal.

The control circuit 202 includes a flip-flop 2021 and a switch chip 2022.

The flip-flop 2021 is configured to output a first toggle signal according to the interrupt signal output by the NFC module 201. The first toggle signal is used to indicate that an output status of the flip-flop 2021 is toggled.

The switch chip 2022 is configured to start the alarm 203 according to the first toggle signal output by the flip-flop 2021.

The control circuit 202 is further configured to turn off the alarm 203. Specifically, the control circuit 202 includes a counter 2023.

The counter 2023 is configured to: start counting according to the interrupt signal generated by the NFC module, stop counting when a count reaches a preset value, and generate a counting stop signal.

The flip-flop 2021 is further configured to output a second toggle signal according to the counting stop signal generated by the counter, where the second toggle signal is used to indicate that the output status of the flip-flop is toggled.

The switch chip 2022 is further configured to turn off the alarm 203 according to the second toggle signal output by the flip-flop 2021.

It should be noted that the card swiping operation in this embodiment of the present invention is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access. The alarm in this embodiment of the present invention may be a motor, a flash lamp, a tricolor light, or another device that is in the mobile terminal and that is capable of sending an alarm signal. No specific limitation is imposed herein.

The mobile terminal in this embodiment of the present invention includes the NFC module 201, the alarm 203, the control circuit 202, and the battery 204. The NFC module 201 may perform the card swiping operation, and generate the interrupt signal. The control circuit 202 starts the alarm 203 according to the interrupt signal, and the alarm 203 sends the alarm signal. When the mobile terminal is powered off, the battery 204 still outputs a voltage, and the output voltage can support normal running of the NFC module 201, the control circuit 202, and the alarm 203. Therefore, even if the mobile terminal is in the power-off state, the alarm 203 can still be triggered by the control circuit 202 and send an alarm. That is, in this solution, even if the mobile terminal is in the power-off state, the mobile terminal still sends an alarm upon NFC-enabled card swiping. In this case, a user can know in time about mistaken NFC-enabled card swiping, thereby preventing a greater loss.

Further, this embodiment of the present invention provides a specific process of starting the alarm 203 by the control circuit 202. This improves implementability of the solution.

Still further, in this embodiment of the present invention, the control circuit 202 may include the counter 2023. According to the counter 2023, the control circuit 202 may turn off the alarm 203 after a preset time elapses. This increases flexibility of the solution and improves user experience.

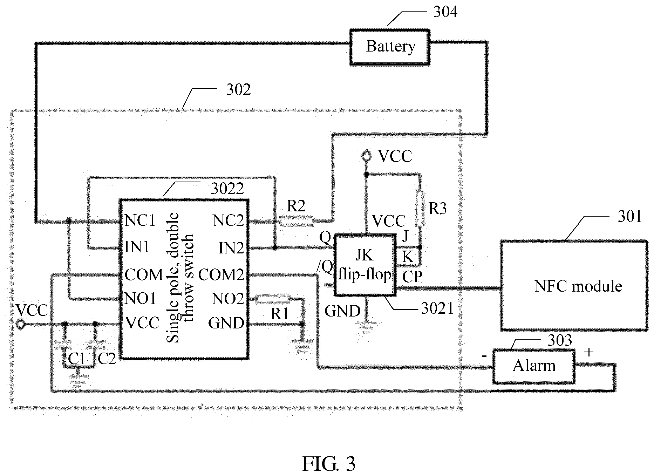

There are multiple types of flip-flops and switch chips that are capable of implementing functions executed in the foregoing embodiment. The following describes a combination thereof in detail. Referring to FIG. 3, another embodiment of a mobile terminal in the embodiments of the present invention includes an NFC module 301, a control circuit 302, an alarm 303, and a battery 304, and the mobile terminal is in a power-off state.

The battery 304 is configured to supply power to the NFC module 301, the control circuit 302, and the alarm 303.

The NFC module 301 is configured to perform a card swiping operation according to a received card swiping request, and generate an interrupt signal.

The control circuit 302 is configured to start the alarm 103 according to the interrupt signal generated by the NFC module 301.

The alarm 303 is configured to send an alarm signal.

The control circuit 302 includes a JK flip-flop 3021 and a single pole, double throw switch chip 3022.

The JK flip-flop 3021 includes a J pin, a K pin, a Q pin, and a CP pin. The J pin and the K pin are connected to a high level, the Q pin is connected to the single pole, double throw switch chip, and the CP pin is connected to the NFC module 301.

The JK flip-flop 3021 is configured to output a first toggle signal according to the interrupt signal generated by the NFC module, where the first toggle signal is used to indicate that an output status of the JK flip-flop is toggled.

The single pole, double throw switch chip 3022 is configured to start the alarm according to the first toggle signal output by the JK flip-flop.

It should be noted that the card swiping operation herein is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

The JK flip-flop is a basic circuit unit in a digital circuit flip-flop. The JK flip-flop has functions of setting to 0, setting to 1, holding, and toggling. Which function the JK flip-flop performs is related to a level connected to the J pin and the K pin. In this embodiment of the present invention, both the J pin and the K pin are connected to a high level, so that the JK flip-flop performs the toggling function. Toggling means that a level output by the Q pin of the JK flip-flop changes from a low level to a high level or from a high level to a low level once a trigger signal is input.

A function of a single pole, double throw switch may be to control a power supply to output in two different directions, that is, may be used for controlling two devices; or may be to control a same device to change an operation direction. The single pole, double throw switch chip is a chip capable of simulating the function of the single pole, double throw switch. In this embodiment of the present invention, a function of the single pole, double throw switch chip is to control a switch of the alarm. Specifically, a COM1 pin of the single pole, double throw switch is connected to a positive electrode of the alarm, a COM2 pin is connected to a negative electrode of the alarm, and connections of the other pins are shown in FIG. 3. An initial state is that the COM1 pin is connected to an NC1 pin, and the COM2 pin is connected to an NC2 pin. In this case, a battery voltage is input to both the positive and the negative electrodes of the alarm, the alarm is not in a working state, and the alarm is turned off. When an output level of the flip-flop is toggled, that is, when the first toggle signal is input to the single pole, double throw switch, a working status of the single pole, double throw switch chip is changed as follows: The COM1 pin is connected to an NO1 pin, and the COM2 pin is connected to an NO2 pin. In this case, the battery voltage is input to the positive electrode of the alarm, and the negative electrode of the alarm is grounded; the alarm forms a loop, and the alarm is started. FIG. 3 is merely an example of a connection of the single pole, double throw switch chip. The single pole, double throw switch chip may also control on and off of the alarm in another manner. No specific limitation is imposed herein.

It should also be noted that the alarm in this embodiment of the present invention may be a motor, a flash lamp, a tricolor light, or another device that is in the mobile terminal and that is capable of sending an alarm signal. No specific limitation is imposed herein.

The mobile terminal in this embodiment of the present invention includes the NFC module 301, the alarm 303, the control circuit 302, and the battery 304. The NFC module 301 may perform the card swiping operation, and generate the interrupt signal. The control circuit 302 starts the alarm 303 according to the interrupt signal, and the alarm 303 sends the alarm signal. When the mobile terminal is powered off, the battery 304 still outputs a voltage, and the output voltage can support normal running of the NFC module 301, the control circuit 302, and the alarm 303. Therefore, even if the mobile terminal is in the power-off state, the alarm 303 can still be triggered by the control circuit 302 and send an alarm. That is, in this solution, even if the mobile terminal is in the power-off state, the mobile terminal still sends an alarm upon NFC-enabled card swiping. In this case, a user can know in time about mistaken NFC-enabled card swiping, thereby preventing a greater loss.

Further, this embodiment of the present invention provides a specific implementation that the control circuit 302 starts the alarm 303 by using the JK flip-flop 3021 and the single pole, double throw switch chip 3022. This improves implementability of the solution.

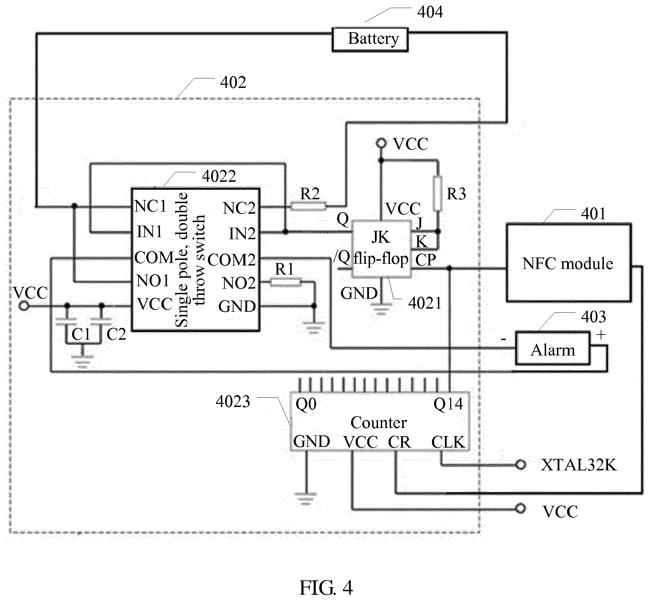

Referring to FIG. 4, another embodiment of a mobile terminal in the embodiments of the present invention includes an NFC module 401, a control circuit 402, an alarm 403, and a battery 404, and the mobile terminal is in a power-off state.

The battery 404 is configured to supply power to the NFC module 401, the control circuit 402, and the alarm 403.

The NFC module 401 is configured to perform a card swiping operation according to a received card swiping request, and generate an interrupt signal.

The control circuit 402 is configured to start the alarm 403 according to the interrupt signal generated by the NFC module 401.

The alarm 403 is configured to send an alarm signal.

The control circuit 402 includes a JK flip-flop 4021, a single pole, double throw switch chip 4022, and a counter 4023.

The JK flip-flop 4021 includes a J pin, a K pin, a Q pin, and a CP pin. The J pin and the K pin are connected to a high level, the Q pin is connected to the single pole, double throw switch chip, and the CP pin is connected to the NFC module 401. The counter 4023 is connected to the CP pin of the JK flip-flop and the NFC module.

The JK flip-flop 4021 is configured to output a first toggle signal according to the interrupt signal generated by the NFC module 401, and output a second toggle signal according to a counting stop signal generated by the counter 4023. The first toggle signal and the second toggle signal are used to indicate that an output signal of the JK flip-flop 4021is toggled.

The single pole, double throw switch chip 4022 is configured to start the alarm according to the first toggle signal output by the JK flip-flop 4021, and turn off the alarm 403 according to the second toggle signal output by the JK flip-flop 4021.

The counter 4023 is configured to: start counting according to the interrupt signal generated by the NFC module 401, stop counting when a count reaches a preset value, and generate a counting stop signal.

It should be noted that the card swiping operation in this embodiment of the present invention is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

The alarm in this embodiment of the present invention may be a motor, a flash lamp, a tricolor light, or another device that is in the mobile terminal and that is capable of sending an alarm signal. No specific limitation is imposed herein.

The mobile terminal in this embodiment of the present invention includes the NFC module 401, the alarm 403, the control circuit 402, and the battery 404. The NFC module 401 may perform the card swiping operation, and generate the interrupt signal. The control circuit 402 starts the alarm 403 according to the interrupt signal, and the alarm 403 sends the alarm signal. When the mobile terminal is powered off, the battery 404 still outputs a voltage, and the output voltage can support normal running of the NFC module 401, the control circuit 402, and the alarm 403. Therefore, even if the mobile terminal is in the power-off state, the alarm 403 can still be triggered by the control circuit 402 and send an alarm. That is, in this solution, even if the mobile terminal is in the power-off state, the mobile terminal still sends an alarm upon NFC-enabled card swiping. In this case, a user can know in time about mistaken NFC-enabled card swiping, thereby preventing a greater loss.

Further, this embodiment of the present invention provides a specific implementation that the control circuit 402 starts the alarm 403 according to the JK flip-flop 4021 and the single pole, double throw switch chip 4022, and a specific implementation that the control circuit 402 turns off the alarm 403 according to the counter 4023, the JK flip-flop 4021, and the single pole, double throw switch chip 4022. This improves implementability of the solution.

For ease of understanding, the following uses a specific scenario to describe in detail interaction between modules of the mobile terminal in this embodiment of the present invention.

A user A carries a bus POS machine, and a user B carries a mobile terminal. The mobile terminal is in the power-off state, and the mobile terminal includes a central processing unit CPU, a SIM card, the NFC module 401, the JK flip-flop 4021, the single pole, double throw switch chip 4022, the counter 4023, the alarm 403, and the battery 404. The battery 404 supplies power to components on the mobile terminal, and a bus pass function is enabled for the NFC module 401. A balance of the bus pass is 200 yuan.

The J pin and the K pin of the JK flip-flop 4021 are connected to a high level, and the CP pin is connected to the NFC module 401 and the counter 4023. An NC1 pin and an NO2 pin of the single pole, double throw switch chip 4022 are connected to a battery voltage, an NC2 is connected to a load R2, the R2 is connected to the battery voltage, an IN1 pin and an IN2 pin are connected to the Q pin of the JK flip-flop 4021, a COM1 pin is connected to a positive electrode of the alarm 403, a COM2 pin is connected to a negative electrode of the alarm, and the NO2 is connected to a load R1. A CR pin of the counter 4023 is connected to the NFC module, and a CLK pin is connected to a 32.768 kHz crystal oscillator. Connection between the pins is shown in FIG. 4.

The user A approaches the user B, and a distance between the bus POS machine of the user A and the mobile terminal of the user B is 10 centimeters. At that time, the bus POS machine of the user A obtains 50 yuan from the balance of the bus pass by using the NFC module 401 on the mobile terminal of the user B. The NFC module 401 generates an interrupt signal, and the interrupt signal is input to the JK flip-flop 4021 through the CP pin, that is, a rectangular pulse is input to the CP pin. A signal output by the Q pin of the JK flip-flop 4021 is toggled from an original low level to a high level. Such a toggle signal is the first toggle signal, and makes the single pole, double throw switch chip 4022 change a working status as follows: The COM1 pin is connected to an NO1 pin, and the COM2 pin is connected to the NO2 pin, so that the battery voltage is input to the positive electrode of the alarm 403 while the negative electrode of the alarm 403 is grounded, that is, the alarm 403 is started, and the alarm 403 sends an alarm signal.

At the same time, the interrupt signal is also input to the counter 4023 through the CR pin as an enable signal of the counter 4023, so as to make the counter 4023 start counting, and the counter 4023 starts to count from 1 to 60. After 60 seconds, the counter 4023 completes counting. The counter 4023 stops counting, and a counting stop signal is then generated. The counting stop signal is input to the JK flip-flop 4021 through the CP pin, that is, another rectangular pulse is input to the JK flip-flop 4021, and a signal output by the Q pin of the JK flip-flop 4021 is toggled again from the original high level to a low level. Such a toggle signal is the second toggle signal, and makes the single pole, double throw switch chip 4023 change the working status again as follows: The COM1 pin is connected to the NC1, and the COM2 pin is connected to the NC2 pin, so that the battery voltage is input to the positive and negative electrodes of the alarm 403, and the alarm 403 stops running, that is, the alarm 403 stops generating the alarm signal.

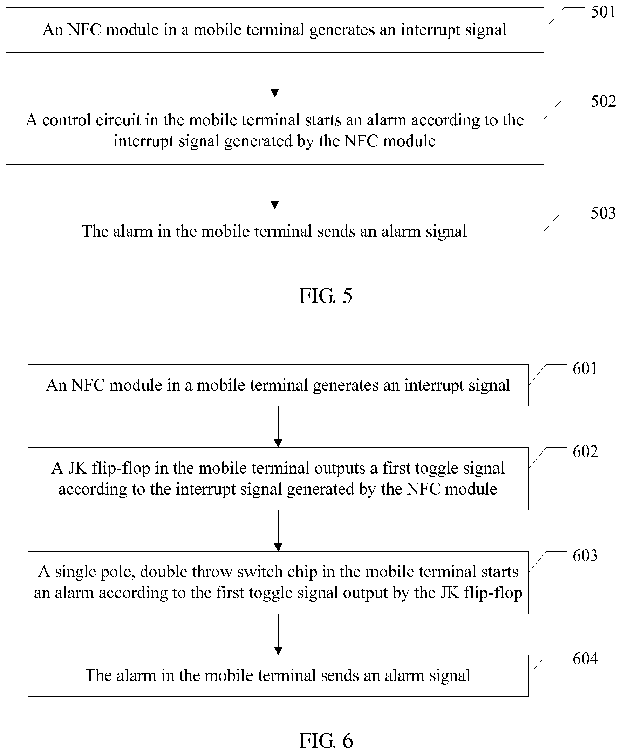

The foregoing describes the mobile terminal in the embodiments of the present invention. The following describes a card swiping alerting method in the embodiments of the present invention. Referring to FIG. 5, an embodiment of a card swiping alerting method in the embodiments of the present invention includes the following steps.

501: An NFC module in a mobile terminal generates an interrupt signal.

When the mobile terminal is in a power-off state, and a POS machine is within a preset range of the mobile terminal, the NFC module in the mobile terminal is started; and the NFC module performs a card swiping operation, and generates the interrupt signal.

It should be noted that the card swiping operation herein is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

502: A control circuit in the mobile terminal starts an alarm according to the interrupt signal generated by the NFC module.

After the NFC module in the mobile terminal generates the interrupt signal, the interrupt signal is input to the control circuit in the mobile terminal, and the control circuit starts the alarm according to the interrupt signal.

503: The alarm in the mobile terminal sends an alarm signal.

After the control circuit in the mobile terminal starts the alarm, the alarm in the mobile terminal sends the alarm signal.

In this embodiment of the present invention, the mobile terminal is in the power-off state; when the NFC module in the mobile terminal performs the card swiping operation, the NFC module generates the interrupt signal; and the control circuit in the mobile terminal starts the alarm according to the interrupt signal, and the alarm sends the alarm signal. That is, even if in the power-off state, the mobile terminal can still send an alarm by using a hardware module, such as the control circuit, upon NFC-enabled card swiping. This allows a user to know in time about mistaken card swiping or card swiping performed by a thief and retrieve a loss in time, thereby preventing a greater loss.

In the foregoing embodiment, the control circuit may start the alarm in different manners according to different compositions. The following describes in detail a specific process of starting an alarm by a control circuit. The control circuit includes a JK flip-flop and a single pole, double throw switch chip. Referring to FIG. 6, another embodiment of a card swiping alerting method in the embodiments of the present invention includes the following steps.

601: An NFC module in a mobile terminal generates an interrupt signal.

When the mobile terminal is in a power-off state, and a POS machine is within a preset range of the mobile terminal, the NFC module in the mobile terminal is started; and the NFC module performs a card swiping operation, and generates the interrupt signal.

It should be noted that the card swiping operation herein is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

602: The JK flip-flop in the mobile terminal outputs a first toggle signal according to the interrupt signal generated by the NFC module.

After the NFC module in the mobile terminal generates the interrupt signal, the interrupt signal is used as a trigger signal to trigger the JK flip-flop. After the JK flip-flop is triggered, an output status is toggled and the first toggle signal is generated. The first toggle signal is input to the single pole, double throw switch chip.

603: The single pole, double throw switch chip in the mobile terminal starts an alarm according to the first toggle signal output by the JK flip-flop.

After the JK flip-flop in the mobile terminal inputs the first toggle signal to the single pole, double throw switch chip, the single pole, double throw switch chip changes a working status of the alarm according to the first toggle signal, and starts the alarm.

604: The alarm in the mobile terminal sends an alarm signal.

After being started, the alarm in the mobile terminal sends the alarm signal. It should be noted that the alarm may be a motor, a flash lamp, a tricolor light, or another device that is in the mobile terminal and that is capable of sending an alarm signal. No specific limitation is imposed herein. Then, the alarm signal sent by the alarm may be vibration of the motor, flashing of the flash lamp, or blinking of the tricolor light. The mobile terminal may also send the alarm signal in another manner. No specific limitation is imposed herein.

In this embodiment of the present invention, the mobile terminal is in the power-off state; when the NFC module in the mobile terminal performs the card swiping operation, the NFC module generates the interrupt signal; and the control circuit in the mobile terminal starts the alarm according to the interrupt signal, and the alarm sends the alarm signal. That is, even if in the power-off state, the mobile terminal can still send an alarm by using a hardware module, such as the control circuit, upon NFC-enabled card swiping. This allows a user to know in time about mistaken card swiping or card swiping performed by a thief and retrieve a loss in time, thereby preventing a greater loss.

Further, in this embodiment of the present invention, a specific process of starting the alarm according to the interrupt signal by the control circuit including the JK flip-flop and the single pole, double throw switch chip is provided. This improves implementability of the solution.

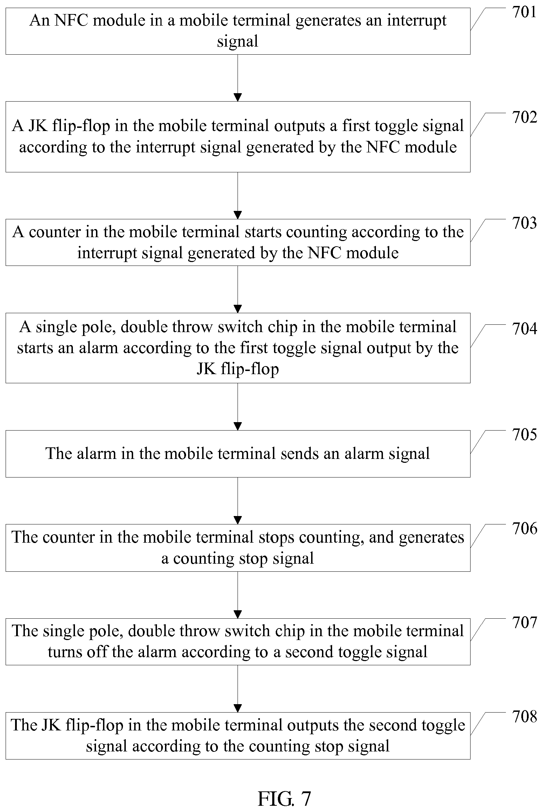

In the foregoing embodiment, after the alarm in the mobile terminal sends the alarm signal, the control circuit may turn off the alarm in multiple manners. The following describes a manner of turning off an alarm in detail. The control circuit includes a JK flip-flop, a single pole, double throw switch, and a counter. Referring to FIG. 7, another embodiment of a card swiping alerting method in the embodiments of the present invention includes the following steps.

701: An NFC module in a mobile terminal generates an interrupt signal.

When the mobile terminal is in a power-off state, and a POS machine is within a preset range of the mobile terminal, the NFC module in the mobile terminal is started; and the NFC module performs a card swiping operation, and generates the interrupt signal.

It should be noted that the card swiping operation herein is an operation that the mobile terminal is simulated as a non-contact card by using the NFC module and implements a corresponding function of the card, for example, an operation that the mobile terminal is simulated as a bus pass and swiped over a POS machine in a bus to pay from a balance of the bus pass, or an operation that the mobile terminal is simulated as an entrance guard card and swiped over a corresponding induction zone for access.

702: The JK flip-flop in the mobile terminal outputs a first toggle signal according to the interrupt signal generated by the NFC module.

After the NFC module in the mobile terminal generates the interrupt signal, the interrupt signal is used as a trigger signal to trigger the JK flip-flop. After the JK flip-flop is triggered, an output status is toggled and the first toggle signal is generated. The first toggle signal is input to the single pole, double throw switch chip.

703: The counter in the mobile terminal starts counting according to the interrupt signal generated by the NFC module.

After the NFC module in the mobile terminal generates the interrupt signal, the interrupt signal is input to the counter, and the counter starts counting according to the interrupt signal.

704: The single pole, double throw switch chip in the mobile terminal starts an alarm according to the first toggle signal output by the JK flip-flop.

After the JK flip-flop in the mobile terminal inputs the first toggle signal to the single pole, double throw switch chip, the single pole, double throw switch chip changes a working status of the alarm according to the first toggle signal, and starts the alarm.

705: The alarm in the mobile terminal sends an alarm signal.

After being started, the alarm in the mobile terminal sends the alarm signal. It should be noted that the alarm may be a motor, a flash lamp, a tricolor light, or another device that is in the mobile terminal and that is capable of sending an alarm signal. No specific limitation is imposed herein. Then, the alarm signal sent by the alarm may be vibration of the motor, flashing of the flash lamp, or blinking of the tricolor light. The mobile terminal may also send the alarm signal in another manner. No specific limitation is imposed herein.

706: The counter in the mobile terminal stops counting, and generates a counting stop signal.

When a count of the counter reaches a preset value, preset duration of the alarm signal sent by the alarm is reached, and the counter in the mobile terminal stops counting, and generates the counting stop signal.

707: The JK flip-flop in the mobile terminal outputs a second toggle signal according to the counting stop signal.

After the counter generates the counting stop signal, the counting stop signal is used as another trigger signal to trigger the JK flip-flop again. After the JK flip-flop is triggered, an output status is toggled again and the second toggle signal is generated. The second toggle signal is input to the single pole, double throw switch chip.

708: The single pole, double throw switch in the mobile terminal turns off the alarm according to the second toggle signal.

After the JK flip-flop in the mobile terminal inputs the second toggle signal to the single pole, double throw switch chip, the single pole, double throw switch changes the working status of the alarm again according to the second toggle signal, and turns off the alarm, so that the alarm stops sending the alarm signal.

In this embodiment of the present invention, the mobile terminal is in the power-off state; when the NFC module in the mobile terminal performs the card swiping operation, the NFC module generates the interrupt signal; and the control circuit in the mobile terminal starts the alarm according to the interrupt signal, and the alarm sends the alarm signal. That is, even if in the power-off state, the mobile terminal can still send an alarm by using a hardware module, such as the control circuit, upon NFC-enabled card swiping. This allows a user to know in time about mistaken card swiping or card swiping performed by a thief and retrieve a loss in time, thereby preventing a greater loss.

Further, in this embodiment of the present invention, the control circuit further includes the counter. The counter may start counting according to the interrupt signal, and when the count reaches the preset value, stop counting and generate a counting stop signal. The JK flip-flop outputs the second toggle signal according to the counting stop signal, so that the single pole, double throw switch chip turns off the alarm according to the second toggle signal. That is, a user may set a value of the counter, so as to turn off the alarm after the preset duration is reached. This improves user experience.

For ease of understanding, the following uses a practical application scenario to describe in detail the card swiping alerting method in this embodiment of the present invention.

A user A carries a bus POS machine, and a user B carries a mobile phone. The mobile phone is in a power-off state, and the mobile phone includes a central processing unit CPU, a SIM card, an NFC module, a JK flip-flop, a single pole, double throw switch chip, a counter, and a motor. A bus pass function is enabled for the NFC module, and a balance of the bus pass is 200 yuan.

The user A approaches the user B, and a distance between the bus POS machine of the user A and the mobile phone of the user B is 10 centimeters. At that time, the bus POS machine of the user A obtains 50 yuan from the balance of the bus pass by using the NFC module on the mobile phone of the user B. The NFC module generates an interrupt signal, and the interrupt signal is input to both the JK flip-flop and the counter. The interrupt signal enables an output status of the JK flip-flop to be toggled, and a first toggle signal is input to the single pole, double throw switch chip. The first toggle signal makes the single pole, double throw switch chip change a working status of the motor, and the motor switches from a vibration stop state to a vibration state, so that the mobile phone vibrates. On the other hand, after the interrupt signal is input to the counter, the counter starts counting from 1 to 60.

After 60 seconds, the counter completes counting and stops counting, and a counting stop signal is then generated. The counting stop signal is input to the JK flip-flop, so that the output status of the JK flip-flop is toggled again and a second toggle signal is input to the single pole, double throw switch chip. The second toggle signal makes the single pole, double throw switch chip change the working status of the motor again, and the motor switches from the vibration state to the vibration stop state, so that the mobile phone stops vibrating.

In the foregoing embodiments, the description of each embodiment has respective focuses. For a part that is not described in detail in an embodiment, reference may be made to related descriptions in other embodiments.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. A mobile phone, comprising a Near Field Communication, NFC, module (101, 201, 301, 401), an alarm (103, 203, 303, 403), a control circuit (102, 202, 302, 402), and a battery (104, 204, 304, 404), wherein
the control circuit is connected to the NFC module (101, 201, 301, 401) and the alarm, and the control circuit comprises a flip-flop (2021), a switch chip (2022), and a counter (2023);
the battery is directly connected to the NFC module (101, 201, 301, 401), the control circuit and the alarm (103, 203, 303, 403), and the battery (104, 204, 304, 404) is configured to output a voltage to supply power to the NFC module (101, 201, 301, 401), the alarm (103, 203, 303, 403), and the control circuit for normal running, when the mobile phone is in a power-off state;
the counter (2023) is connected to the flip-flop (2021) and the NFC module (101, 201, 301, 401);
the NFC module (101, 201, 301, 401) is configured to perform a card swiping operation according to a received card swiping request, and generate an interrupt signal, when the mobile phone is in the power-off state;
the flip-flop (2021) is configured to output a first toggle signal according to the interrupt signal output by the NFC module (101, 201, 301, 401), wherein the first toggle signal is used to indicate that an output status of the flip-flop (2021) is toggled;
the switch chip (2022) is configured to start the alarm (103, 203, 303, 403) according to the first toggle signal output by the flip-flop (2021);
the alarm (103, 203, 303, 403) is configured to send an alarm signal, when the mobile phone is in the power-off state;
the counter is configured to: start counting according to the interrupt signal generated by the NFC module (101, 201, 301, 401), stop counting when a count reaches a preset value, and generate a counting stop signal;
the flip-flop (2021) is further configured to output a second toggle signal according to the counting stop signal generated by the counter (2023), wherein the second toggle signal is used to indicate that the output status of the flip-flop (2021) is toggled; and
the switch chip (2022) is further configured to turn off the alarm (103, 203, 303, 403) according to the second toggle signal output by the flip-flop (2021).

2. The mobile phone according to claim 1, wherein the flip-flop (2021) is a JK flip-flop (3021, 4021).

3. The mobile phone according to claim 2, wherein the JK flip-flop (3021, 4021) comprises a J pin, a K pin, a Q pin, and a CP pin; and the J pin and the K pin are connected to a high level, the Q pin is connected to the switch chip (2022), and the CP pin is connected to the NFC module (101, 201, 301, 401).

4. The mobile phone according to any one of claims 1 to 3, wherein the switch chip (2022) is a single pole, double throw switch chip (3022, 4022).

5. The mobile phone according to claim 4, wherein the single pole, double throw switch chip (3022, 4022) comprises a COM1 pin and a COM2 pin; and the COM1 pin is connected to a positive electrode of the alarm (103, 203, 303, 403), and the COM2 pin is connected to a negative electrode of the alarm (103, 203, 303, 403).

6. The mobile phone according to any one of claims 1 to 5, wherein the alarm (103, 203, 303, 403) is a motor.

7. The mobile phone according to any one of claims 1 to 5, wherein the alarm (103, 203, 303, 403) is a flash lamp or a tricolor light.

## Patentansprüche

1. Mobiltelefon, das ein Near Field Communication, NFC, Modul (101, 201, 301, 401), einen Alarm (103, 203, 303, 403), eine Steuerschaltung (102, 202, 302, 402) und eine Batterie (104, 204, 304, 404) umfasst, wobei
die Steuerschaltung mit dem NFC-Modul (101, 201, 301, 401) und dem Alarm verbunden ist und die Steuerschaltung einen Flip-Flop (2021), einen Schaltchip (2022) und einen Zähler (2023) umfasst; die Batterie direkt mit dem NFC-Modul (101, 201, 301, 401), der Steuerschaltung und dem Alarm (103, 203, 303, 403) verbunden ist, und die Batterie (104, 204, 304, 404) dazu konfiguriert ist, eine Spannung auszugeben, um das NFC-Modul (101, 201, 301, 401), den Alarm (103, 203, 303, 403) und die Steuerschaltung für den Normalbetrieb mit Strom zu versorgen, wenn sich das Mobiltelefon im ausgeschalteten Zustand befindet;
der Zähler (2023) mit dem Flip-Flop (2021) und dem NFC-Modul (101, 201, 301, 401) verbunden ist;
das NFC-Modul (101, 201, 301, 401) so konfiguriert ist, dass es einen Kartendurchzugsvorgang gemäß einer empfangenen Kartendurchzugsanforderung durchführt und ein Unterbrechungssignal erzeugt, wenn sich das Mobiltelefon im ausgeschalteten Zustand befindet;
der Flip-Flop (2021) dazu konfiguriert ist, ein erstes Umschaltsignal gemäß dem von dem NFC-Modul (101, 201, 301, 401) ausgegebenen Unterbrechungssignal auszugeben, wobei das erste Umschaltsignal verwendet wird, um anzuzeigen, dass ein Ausgabestatus des Flip-Flop (2021) umgeschaltet wird;
der Schaltchip (2022) so konfiguriert ist, dass er den Alarm (103, 203, 303, 403) gemäß dem ersten Umschaltsignal auslöst, das von dem Flip-Flop (2021) ausgegeben wird;
der Alarm (103, 203, 303, 403) so konfiguriert ist, dass er ein Alarmsignal sendet, wenn sich das Mobiltelefon im ausgeschalteten Zustand befindet;
der Zähler konfiguriert ist zum: Starten des Zählens gemäß dem Unterbrechungssignal, das durch das NFC-Modul (101, 201, 301, 401) erzeugt wird, Stoppen des Zählens, wenn ein Zählwert einen voreingestellten Wert erreicht, und Erzeugen eines Zählstoppsignals;
das Flip-Flop (2021) ferner dazu konfiguriert ist, ein zweites Umschaltsignal gemäß dem Zählstoppsignal auszugeben, das von dem Zähler (2023) erzeugt wird, wobei das zweite Umschaltsignal verwendet wird, um anzuzeigen, dass der Ausgabestatus des Flip-Flops (2021) umgeschaltet ist; und
der Schaltchip (2022) ferner so konfiguriert ist, dass er den Alarm (103, 203, 303, 403) gemäß dem zweiten Umschaltssignal ausstellt, das von dem Flip-Flop (2021) ausgegeben wird.

2. Mobiltelefon nach Anspruch 1, wobei der Flip-Flop (2021) ein JK-Flip-Flop (3021, 4021) ist.

3. Mobiltelefon nach Anspruch 2, wobei der JK-Flip-Flop (3021, 4021) einen J-Pin, einen K-Pin, einen Q-Pin und einen CP-Pin umfasst; und der J-Pin und der K-Pin mit einem hohen Pegel verbunden sind, der Q-Pin mit dem Schaltchip (2022) verbunden ist und der CP-Pin mit dem NFC-Modul (101, 201, 301, 401) verbunden ist.

4. Mobiltelefon nach einem der Ansprüche 1 bis 3, wobei der Schaltchip (2022) ein einpoliger Umschaltchip (3022, 4022) ist.

5. Mobiltelefon nach Anspruch 4, wobei der einpolige Umschaltchip (3022, 4022) einen COM1-Pin und einen COM2-Pin umfasst; und der COM1-Pin mit einer positiven Elektrode des Alarms (103, 203, 303, 403) verbunden ist, und der COM2-Pin mit einer negativen Elektrode des Alarms (103, 203, 303, 403) verbunden ist.

6. Mobiltelefon nach einem der Ansprüche 1 bis 5, wobei der Alarm (103, 203, 303, 403) ein Motor ist.

7. Mobiltelefon nach einem der Ansprüche 1 bis 5, wobei der Alarm (103, 203, 303, 403) eine Flash-Lampe oder ein dreifarbiges Licht ist.

## Revendications

1. Téléphone mobile, comprenant un module de communication en champ proche, NFC (101, 201, 301, 401), une alarme (103, 203, 303, 403), un circuit de commande (102, 202, 302, 402), et une batterie (104, 204, 304, 404), dans lequel
le circuit de commande est connecté au module NFC (101, 201, 301, 401) et à l'alarme, et le circuit de commande comprend une bascule (2021), une puce de commutation (2022) et un compteur (2023);
la batterie est directement connectée au module NFC (101, 201, 301, 401), au circuit de commande et à l'alarme (103, 203, 303, 403), et la batterie (104, 204, 304, 404) est configurée pour émettre une tension pour alimenter le module NFC (101, 201, 301, 401), l'alarme (103, 203, 303, 403) et le circuit de commande pour un fonctionnement normal, lorsque le téléphone mobile est dans un état de mise hors tension ;
le compteur (2023) est connecté à la bascule (2021) et au module NFC (101, 201, 301, 401) ;
le module NFC (101, 201, 301, 401) est configuré pour effectuer une opération de balayage de carte selon une demande de balayage de carte reçue, et générer un signal d'interruption, lorsque le téléphone mobile est dans l'état de mise hors tension ;
la bascule (2021) est configurée pour émettre un premier signal de bascule selon le signal d'interruption émis par le module NFC (101, 201, 301, 401), dans lequel le premier signal de bascule est utilisé pour indiquer qu'un état de sortie de la bascule (2021) est basculée ;
la puce de commutation (2022) est configurée pour déclencher l'alarme (103, 203, 303, 403) selon le premier signal de bascule émis par la bascule (2021) ;
l'alarme (103, 203, 303, 403) est configurée pour envoyer un signal d'alarme, lorsque le téléphone mobile est dans l'état de mise hors tension ;
le compteur est configuré pour : démarrer le comptage en fonction du signal d'interruption généré par le module NFC (101, 201, 301, 401), arrêter le comptage lorsqu'un comptage atteint une valeur prédéfinie, et générer un signal d'arrêt de comptage ;
la bascule (2021) est en outre configurée pour émettre un second signal de bascule selon le signal d'arrêt de comptage généré par le compteur (2023), dans lequel le second signal de bascule est utilisé pour indiquer que l'état de sortie de la bascule (2021) est basculé ; et
la puce de commutation (2022) est en outre configurée pour désactiver l'alarme (103, 203, 303, 403) selon le second signal de bascule émis par la bascule (2021).

2. Téléphone mobile selon la revendication 1, dans lequel la bascule (2021) est une bascule JK (3021, 4021).

3. Téléphone mobile selon la revendication 2, dans lequel la bascule JK (3021, 4021) comprend une broche J, une broche K, une broche Q et une broche CP ; et la broche J et la broche K sont connectées à un haut niveau, la broche Q est connectée à la puce de commutation (2022) et la broche CP est connectée au module NFC (101, 201, 301, 401).

4. Téléphone mobile selon l'une quelconque des revendications 1 à 3, dans lequel la puce de commutation (2022) est une puce de commutation unipolaire bidirectionnelle (3022, 4022).

5. Téléphone mobile selon la revendication 4, dans lequel la puce de commutation unipolaire bidirectionnelle (3022, 4022) comprend une broche COM1 et une broche COM2 ; et la broche COM1 est connectée à une électrode positive de l'alarme (103, 203, 303, 403), et la broche COM2 est connectée à une électrode négative de l'alarme (103, 203, 303, 403).

6. Téléphone mobile selon l'une quelconque des revendications 1 à 5, dans lequel l'alarme (103, 203, 303, 403) est un moteur.

7. Téléphone mobile selon l'une quelconque des revendications 1 à 5, dans lequel l'alarme (103, 203, 303, 403) est une lampe flash ou une lumière tricolore.
